(19) **Europäisches Patentamt**

**European Patent Office**

**Office européen des brevets**

(11) **EP 1 284 941 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(51) Int Cl.⁷: **C04B 35/465**

(21) Anmeldenummer: **01947154.9**

(86) Internationale Anmeldenummer:
**PCT/DE2001/001929**

(22) Anmeldetag: **21.05.2001**

(87) Internationale Veröffentlichungsnummer:
**WO 2001/090027 (29.11.2001 Gazette 2001/48)**

(54) **KERAMISCHES MATERIAL, VERFAHREN ZU DESSEN HERSTELLUNG, BAUELEMENT MIT DEM KERAMISCHEN MATERIAL UND VERWENDUNG DES BAUELEMENTS**

CERAMIC MATERIAL, METHOD FOR PRODUCTION AND USE THEREOF AND COMPONENT THEREWITH

MATERIAU CERAMIQUE, SON PROCEDE DE PRODUCTION, COMPOSANT COMPORTANT CE MATERIAU CERAMIQUE ET UTILISATION DUDIT COMPOSANT

(84) Benannte Vertragsstaaten:
**AT BE CH CY DE DK ES FI FR GB GR IE IT LI LU MC NL PT SE TR**

(30) Priorität: **26.05.2000 DE 10026261**

(43) Veröffentlichungstag der Anmeldung:
**26.02.2003 Patentblatt 2003/09**

(73) Patentinhaber: **EPCOS AG**
**81669 München (DE)**

(72) Erfinder: **SCHÖPF, Harald**
**A-9900 Lienz (AT)**

(74) Vertreter: **Epping Hermann & Fischer**
**Ridlerstrasse 55**
**80339 München (DE)**

(56) Entgegenhaltungen:
**DE-A- 2 321 529**   **DE-A- 2 449 028**
**DE-A- 2 626 513**   **DE-A- 2 714 440**

**Beschreibung**

Die Erfindung betrifft ein keramisches Material, dessen ohmscher Widerstand einen positiven Temperaturkoeffizienten aufweist. Ferner betrifft die Erfindung ein Verfahren zur Herstellung des keramischen Materials. Darüber hinaus betrifft die Erfindung ein Bauelement mit einem Grundkörper aus dem keramischen Material. Ferner betrifft die Erfindung die Verwendung des Bauelements.

Es sind Keramiken der eingangs genannten Art bekannt, die Blei und darüber hinaus Dotierstoffe wie Yttrium, Lanthan, Holmium, Niob, Neodym und Cer enthalten. Darüber hinaus enthalten die bekannten keramischen Materialien Mangan aus Manganoxid und aus Mangansulfat. Die bekannten keramischen Materialien werden verwendet als Grundkörper für keramische Bauelemente, die ihrerseits wiederum als PTC-Widerstand Verwendung finden.

Die bekannten keramischen Materialien haben den Nachteil, daß sie einen hohen Bleigehalt aufweisen. Sie sind daher nicht umweltfreundlich.

Ferner haben die bekannten keramischen Materialien den Nachteil, daß sie einen hohen spezifischen Widerstand aufweisen. Deshalb muß zur Herstellung von PTC-Widerständen mit einem niedrigen Widerstand ein vergleichsweise großvolumiger Grundkörper verwendet werden. Die daraus resultierenden großvolumigen Bauelemente sind überall dort, wo Miniaturisierung eine wichtige Rolle spielt, unerwünscht.

Desweiteren weisen die bekannten keramischen Materialien den Nachteil auf, daß sie eine niedrige Curietemperatur < 100°C besitzen. Bei spezifischen Anwendungen, beispielsweise in Überlast-Bauteilen, werden höhere Curietemperaturen bis 150°C gewünscht. Zwar kann die Curietemperatur der bekannten keramischen Materialien innerhalb gewisser Grenzen variiert werden; jedoch ist dazu eine weitere Erhöhung des Gehaltes an unerwünschtem Blei erforderlich.

Die bekannten keramischen Materialien weisen ferner den Nachteil auf, daß sie eine niedrige Spannungsfestigkeit gegen Überspannungen besitzen.

Es ist darüber hinaus ein Verfahren zur Herstellung der bekannten keramischen Materialien bekannt, wobei die in der Keramik enthaltene Menge an Mangan über die Zugabe von festem Manganoxid beziehungsweise Mangansulfat gesteuert wird. Die Menge an Mangan bestimmt dabei empfindlich die elektrischen Eigenschaften der so hergestellten Keramik.

Die Einstellung des Mangangehalts über einen Feststoff hat den Nachteil, daß die mengenmäßige Bestimmung eines Feststoffs, vorzugsweise über das Gewicht, nur mit äußerst begrenzter Genauigkeit möglich ist. Desweiteren hat die Zugabe des Mangans als Feststoff den Nachteil, daß sich das Mangan nur mit unzureichender Homogenität mit den übrigen Materialbestandteile vermischen läßt. Daraus resultieren örtlich variierende Eigenschaften der hergestellten keramischen Materialien, was im Zuge einer Massenfertigung von Bauelementen unerwünscht ist.

Ziel der vorliegenden Erfindung ist es daher, ein keramisches Material bereitzustellen, dessen ohmscher Widerstand einen positiven Temperaturkoeffizienten aufweist, und das einen niedrigen spezifischen Widerstand, einen niedrigen Bleigehalt sowie eine hohe Curietemperatur aufweist.

Ferner ist es Ziel der Erfindung, ein Verfahren zur Herstellung des keramischen Materials anzugeben, das eine genaue Kontrolle der Zusammensetzung, insbesondere der die elektrischen Eigenschaften der Keramik stark bestimmenden Bestandteile, und eine hohe Homogenität der Zusammensetzung der Keramik erlaubt.

Diese Ziele werden erfindungsgemäß durch ein keramisches Material nach Anspruch 1 sowie durch ein Verfahren zur Herstellung des keramischen Materials nach Anspruch 3 erreicht. Vorteilhafte Ausgestaltungen der Erfindung, ein Bauelement mit der Erfindung und die Verwendung des Bauelements sind den weiteren Ansprüchen zu entnehmen.

Die Erfindung gibt ein keramisches Material an mit der Zusammensetzung:

$$Ba_xCa_ySr_{z+r}Pb_zDy_pMn_qTi_{1+d}O_3(SiO_2)_{0,02}$$

wobei gilt:

$$0,0014 \leq p \leq 0,003; \quad 0 \leq q \leq 0,00008; \quad -0,001 \leq d \leq 0,001;$$

$$0,45 \leq x \leq 0,63; \quad 0,03 \leq y \leq 0,04; \quad 0,17 \leq z \leq 0,18;$$

$$-0,03 \leq r \leq 0,17; \quad x + y + 2z + r + p + q = 1.$$

Das keramische Material kann gegebenenfalls weitere übliche Bestandteile in geringen Mengen enthalten, welche die gewünschten Eigenschaften des keramischen Materials nicht beeinträchtigen.

Das erfindungsgemäße keramische Material hat den Vorteil, daß es neben einem positiven Temperaturkoeffizienten seines ohmschen Widerstands einen niedrigen spezifischen Widerstand zwischen 3 und 30 Ωcm aufweist. Dies erlaubt die Herstellung von keramischen Bauelementen, die mit einem relativ geringen Bauelementvolumen einen niedrigen Bauelementwiderstand realisieren. Darüber hinaus hat das erfindungsgemäße keramische Material den Vorteil, daß es lediglich einen geringen Gehalt an Blei aufweist.

Ferner hat das erfindungsgemäße keramische Material den Vorteil, daß es eine relativ hohe Curietemperatur zwischen 60°C und 150°C aufweist. In diesem Zusammenhang ist es auch besonders vorteilhaft, daß die Curietemperatur durch die Wahl des Gehalts an Dysprosium und Mangan sehr leicht variiert werden kann.

Darüber hinaus hat das keramische Material den Vorteil, daß es eine starke Widerstandserhöhung im Bereich der Curietemperatur um einen Faktor von bis zu $10^6$ aufweist. Dadurch kann ein mit dem keramischen Material hergestelltes PTC-Bauelement besonders gut seine Schutzfunktion für in Serie dazu geschaltete Bauteile erfüllen.

Ferner gibt die Erfindung ein Bauelement an, das einen Grundkörper aus einem erfindungsgemäßen keramischen Material aufweist und bei dem an der Oberfläche des Grundkörpers zwei elektrisch leitfähige Elektroden angeordnet sind. Ein solches Bauelement kann besonders leicht als PTC-Widerstand verwendet werden, wobei sich der Widerstand durch eine hohe Spannungsfestigkeit von bis zu 80 Volt pro Millimeter bei einem spezifischen Widerstand von 3 Ωcm auszeichnet. Die elektrische Spannungsfestigkeit kann mit Hilfe der angegebenen Keramik-Rezeptur sehr genau innerhalb enger Grenzen reproduziert werden.

Die Erfindung gibt darüber hinaus ein Verfahren zur Herstellung des keramischen Materials an, wobei zunächst aus einer Manganchloridlösung und einer Dysprosiumchloridlösung eine Mischlösung hergestellt wird. Es ist hierbei besonders vorteilhaft, jeweils saure Lösungen mit einer Konzentration von 5 % im Falle der Manganchlorid- und einer Konzentration von 10 % im Falle der Dysprosiumchloridlösung zu verwenden.

Die so hergestellte Mischlösung wird durch Ausfällen von Mangankarbonat, Manganhydroxid, Dysprosiumskarbonat und Dysprosiumhydroxid in eine Mischsuspension überführt. Die so erhaltene Mischsuspension wird mit einer Siliziumoxidsuspension vermischt und so in eine Vorsuspension überführt.

Anschließend werden zur Vorsuspension die Karbonate von Barium, Kalzium, Strontium, Blei sowie Titanoxid beigegeben. Es ist aber auch möglich, die genannten Metalle in Form von Oxiden beizugeben. Die beigegebenen Metalle werden mit der Vorsuspension vermischt, woraus eine Nachsuspension resultiert.

Die Nachsuspension wird schließlich durch Umsetzen der Karbonate, Oxide und Hydroxide durch Kalzinieren, Granulieren des so umgesetzten Pulvers und durch anschließendes Pressen und Sintern weiterverarbeitet.

Das angegebene Verfahren zur Herstellung des keramischen Materials hat den Vorteil, daß durch Mischen der die elektrischen Eigenschaften des Materials bestimmenden Bestandteile in Form von flüssigen Lösungen eine äußerst genaue Kontrolle des Gehalts der Keramik an Mangan und Dysprosium einstellbar ist.

Ferner garantiert die Verarbeitung von Mangan und Dysprosium in Form von Lösungen eine optimale Vermischung dieser Bestandteile und somit eine hohe Homogenität der Eigenschaften der Keramik. Insbesondere die Einstellung der Curietemperatur, die empfindlich vom Gehalt an Mangan und Dysprosium abhängt, gelingt so in äußerst genauer Weise.

Es ist ferner ein Verfahren besonders vorteilhaft, wobei zum Ausfällen der Karbonate beziehungsweise Hydroxide von Mangan und Dysprosium eine Ammoniumkarbonat-Lösung verwendet wird. Es ist insbesondere von Vorteil, eine Ammoniumkarbonat-Lösung mit einer Konzentration von 10 % zu verwenden.

Das Kalzinieren des keramischen Materials erfolgt besonders vorteilhaft bei einer Temperatur zwischen 1000 und 1100°C. Vorzugsweise wird eine Temperatur von 1050°C verwendet.

Das Sintern des keramischen Materials erfolgt vorteilhafterweise bei einer Temperatur zwischen 1200 und 1350°C. Vorzugsweise wird eine Temperatur zwischen 1295 und 1310°C verwendet.

Die Erfindung gibt ferner die Verwendung des Bauelements als PTC-Widerstand an. Aufgrund seiner speziellen Eigenschaften, insbesondere im Hinblick auf den spezifischen Widerstand und die Curietemperatur der verwendeten Keramik, ist das erfindungsgemäße Bauelement besonders als PTC-Widerstand geeignet.

Insbesondere auch wegen seiner hohen Spannungsfestigkeit kommt der Einsatz des erfindungsgemäßen Bauelements zum Schutz von Überlastbauteilen gegenüber Spannungsspitzen sowie für Bauteile zum Entmagnetisieren in Betracht.

Im folgenden wird die Erfindung anhand eines Ausführungsbeispiels und den dazugehörigen Figuren näher erläutert.

Figur 1    zeigt beispielhaft ein erfindungsgemäßes Bauelement im schematischen Querschnitt.

Figur 2    zeigt den ohmschen Widerstand des Bauelements aus Figur 1, aufgetragen über der Temperatur.

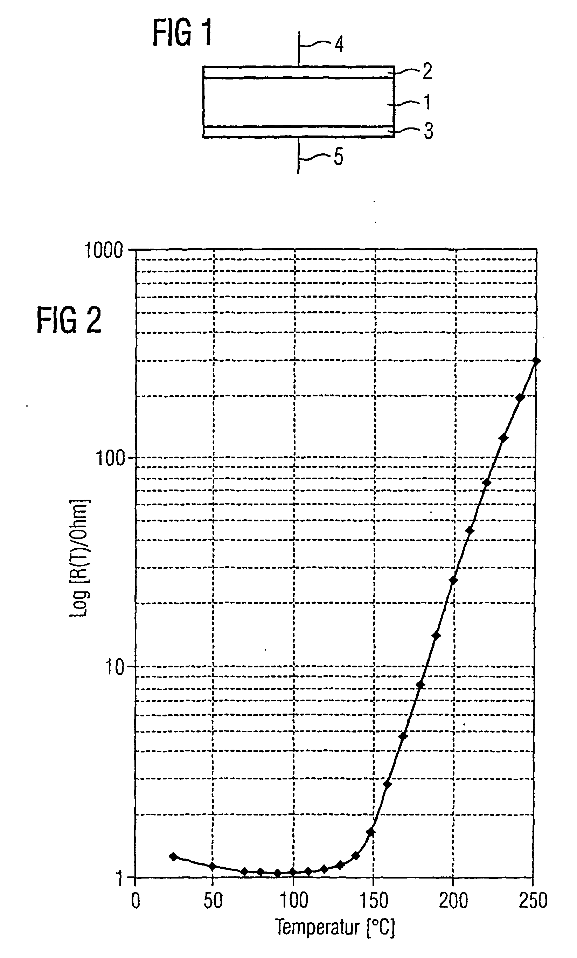

Figur 1 zeigt einen PTC-Widerstand mit einem zylinderförmigen Grundkörper 1, der aus der erfindungsgemäßen Keramik besteht. Auf der Oberseite des Grundkörpers 1 ist eine erste Elektrode 2 aufgebracht, die beispielsweise aus einer Silbereinbrennpaste bestehen kann. Die erste Elektrode 2 ist mit einem ersten Anschlußdraht 4 verlötet. Auf der Unterseite des Grundkörpers 1 ist eine zweite Elektrode 3 aufgebracht, die ihrerseits wiederum mit einem zweiten Anschlußdraht 5 verlötet ist. Mit Hilfe der Anschlußdrähte 4, 5 kann das Bauelement mit weiteren Bauelementen verschaltet werden.

Die dem Grundkörper 1 des Bauelements bildende Keramik weist eine Zusammensetzung auf, die durch folgende Werte definiert ist:

p = 0,0018
q = 0,00008
d = 0,001
x = 0,62812
y = 0,036
z = 0,18
r = -0,026.

Ferner weist das in Figur 1 dargestellte Bauelement einen Durchmesser von 8 mm und eine Höhe von 1,5 mm auf. Zusammen mit der in Figur 2 dargestellten Niederohmigkeit des Bauelements zeigt dies, daß mit Hilfe von sehr kleinen Abmessungen schon sehr niederohmige Bauelemente aufgrund der erfindungsgemäßen Keramik realisiert werden können.

Figur 2 zeigt den ohmschen Widerstand des in Figur 1 dargestellten Bauelements, aufgetragen in Abhängigkeit von der Temperatur. Man erkennt neben einem sehr niedrigen Widerstand bei Zimmertemperatur zwischen 1 und 1,1 $\Omega$ eine starke Widerstandserhöhung, die ab der Curietemperatur von zirka 150°C einsetzt. Die Widerstandserhöhung verläuft näherungsweise exponentiell und beträgt mehr als zwei Größenordnungen.

Die Erfindung beschränkt sich nicht auf das dargestellte Ausführungsbeispiel, sondern wird in ihrer allgemeinsten Form durch die Patentansprüche 1, 2 und 3 definiert.

**Patentansprüche**

**1.** Keramisches Material mit der Zusammensetzung:

$$Ba_xCa_ySr_{z+r}Pb_zDy_pMn_qTi_{1+d}O_3(SiO_2)_{0,02}$$

wobei gilt:

$$0,0014 \leq p \leq 0,003; \; 0 \leq q \leq 0,00008; \; -0,001 \leq d \leq 0,001;$$

$$0,45 \leq x \leq 0,63; \; 0,03 \leq y \leq 0,04; \; 0,17 \leq z \leq 0,18;$$

$$-0,03 \leq r \leq 0,17; \; x + y + 2z + r + p + q = 1.$$

**2.** Bauelement mit einem Grundkörper (1) aus einem keramischen Material nach Anspruch 1, bei dem an der Oberfläche des Grundkörpers (1) zwei elektrisch leitfähige Elektroden (2, 3) angeordnet sind.

**3.** Verfahren zur Herstellung des keramischen Materials nach Anspruch 1 mit folgenden Schritten:

a) Herstellen einer Mischlösung aus einer $MnCl_2$-Lösung und einer $DyCl_3$-Lösung
b) Überführen der Mischlösung in eine Mischsuspension durch Ausfällen von Mangankarbonat, Manganhydroxid, Dysprosiumcarbonat und Dysprosiumhydroxid
c) Vermischen der Mischsuspension mit einer $SiO_2$-Suspension zu einer Vorsuspension
d) Vermischen der Vorsuspension mit Barium, Calzium, Strontium und Blei in Form von Oxiden und/oder Carbonaten sowie mit Titanoxid zu einer Nachsuspension

## EP 1 284 941 B1

e) Kalzinieren, Granulieren, Pressen und Sintern der festen Bestandteile der Nachsuspension.

4. Verfahren nach Anspruch 3,
   wobei zum Ausfällen eine Ammoniumcarbonat-Lösung verwendet wird.

5. Verfahren nach Anspruch 3 bis 4,
   wobei das Kalzinieren bei einer Temperatur zwischen 1000 und 1100 °C erfolgt.

6. Verfahren nach Anspruch 3 bis 5,
   wobei das Sintern bei einer Temperatur zwischen 1200 und 1350 °C erfolgt.

7. Verwendung des Bauelements nach Anspruch 2 als PTC-Widerstand.

**Claims**

1. Ceramic material having the following composition:

$$Ba_xCa_ySr_{z+r}Pb_zDy_pMn_qTi_{1+d}O_3(SiO_2)_{0.02}$$

in which:

$$0.0014 \leq p \leq 0.003; 0 \leq q \leq 0.00008; -0.001 \leq d \leq 0.001;$$

$$0.45 \leq x \leq 0.63; 0.03 \leq y \leq 0.04; 0.17 \leq z \leq 0.18;$$

$$-0.03 \leq r \leq 0.17; x + y + 2z + r + p + q = 1.$$

2. Component having a base body (1) made from a ceramic material according to Claim 1, in which two electrically conductive electrodes (2, 3) are arranged at the surface of the base body (1).

3. Process for producing the ceramic material according to Claim 1, comprising the following steps:

   a) producing a mixed solution from an $MnCl_2$ solution and a $DyCl_3$ solution
   b) converting the mixed solution into a mixed suspension by precipitation of manganese carbonate, manganese hydroxide, dysprosium carbonate and dysprosium hydroxide,
   c) mixing the mixed suspension with a $SiO_2$ suspension to form a primary suspension,
   d) mixing the primary suspension with barium, calcium, strontium and lead in the form of oxides and/or carbonates and with titanium oxide to form a secondary suspension,
   e) calcining, granulating, pressing and sintering the solid constituents of the secondary suspension.

4. Process according to Claim 3, in which an ammonium carbonate solution is used for the precipitation step.

5. Process according to Claim 3 to 4, in which the calcining takes place at a temperature of between 1000 and 1100°C.

6. Process according to Claims 3 to 5, in which the sintering takes place at a temperature of between 1200 and 1350°C.

7. Use of the component according to Claim 2 as a PTC resistor.

**Revendications**

1. Matériau céramique ayant la composition :

$$Ba_xCa_ySr_{z+r}Pb_zDy_pMn_qTi_{1+d}O_3(SiO_2)_{0,02}$$

dans laquelle :

$$0,0014 \leq p \leq 0,003 \; ; \; 0 \leq q \leq 0,00008 \; ; \; -0,001 \leq d \leq 0,001 \; ;$$

$$0,45 \leq x \leq 0,63 \; ; \; 0,03 \leq y \leq 0,04 \; ; \; 0,17 \leq z \leq 0,18 \; ;$$

$$-0,03 \leq r \leq 0,17 \; ; \; x + y + 2z + r + p + q = 1.$$

**2.** Composant ayant un corps (1) de base en un matériau céramique suivant la revendication 1, dans lequel il est placé à la surface du corps (1) de base deux électrodes (2, 3) conductrices de l'électricité.

**3.** Procédé de production du matériau céramique suivant la revendication 1, comprenant les stades suivants :

a) préparation d'une solution mixte constituée d'une solution de $MnCl_2$ et d'une solution de $DyCl_3$,
b) transformation de la solution mixte en une suspension mixte par précipitation de carbonate de manganèse, d'hydroxyde de manganèse, de carbonate de dysprosium et d'hydroxyde de dysprosium,
c) mélange de la suspension mixte à une suspension de $SiO_2$ pour obtenir une présuspension.
d) mélange de la présuspension à du baryum, du calcium, du strontium et du plomb sous la forme d'oxydes et/ou de carbonates, ainsi qu'à de l'oxyde de titane pour obtenir une post-suspension,
e) calcination, granulation, compression et frittage des constituants solides de la post-suspension.

**4.** Procédé suivant la revendication 3, dans lequel on utilise une solution de carbonate d'ammonium pour la précipitation.

**5.** Procédé suivant la revendication 3 à 4, dans lequel on effectue la calcination à une température comprise entre 1 000 et 1 100°C.

**6.** Procédé suivant la revendication 3 à 5, dans lequel on effectue le frittage à une température comprise entre 1 200 et 1 350°C.

**7.** Utilisation du composant suivant la revendication 2 comme résistance à coefficient positif de température.

## FIG 1

## FIG 2